# EUROPÄISCHE PATENTSCHRIFT

(11) **EP 2 496 462 B1**
(45) Veröffentlichungstag und Bekanntmachung des Hinweises auf die Patenterteilung: **16.04.2014**
(21) Anmeldenummer: 10754312.6
(22) Anmeldetag: 09.09.2010
(51) Int. Cl.: B62D 15/02, B62D 1/16

(54) **Verfahren zum Betrieb eines Lenksystems in einem Fahrzeug**
Operating method for a steering system in a vehicle
Méthode d'opération d'un système de direction situé dans un véhicule

(30) Priorität: 04.11.2009 DE 102009046375
(43) Veröffentlichungstag der Anmeldung: 12.09.2012
(73) Patentinhaber: Robert Bosch GmbH, 70442 Stuttgart (DE)
(72) Erfinder: KORNHAAS, Robert, 73565 Spraitbach (DE); SCHOEN, Achim, 74321 Bietigheim-Bissingen (DE)
(86) Internationale Anmeldenummer: PCT/EP2010/063221
(87) Internationale Veröffentlichungsnummer: WO 2011/054564

(56) Entgegenhaltungen:
- WO-A1-2004/065195
- DE-A1- 10 042 308
- US-B1- 6 580 989

## Beschreibung

Die Erfindung bezieht sich auf ein Verfahren zum Betrieb eines Lenksystems in einem Fahrzeug.

### Stand der Technik

Aus der DE 10 2005 021 725 A1 ist bekannt, mithilfe einer fahrzeugeigenen Sensoreinrichtung eine unmittelbar bevorstehende Kollision des Fahrzeuges zu erfassen und in Abhängigkeit von Kollisionsparametern bestimmte Maßnahmen entweder zum Eigenschutz oder zum Schutz des Unfallgegners im Fahrzeug zu ergreifen. Diese Maßnahmen betreffen aktiv verlagerbare Sicherheitsbauteile im Fahrzeug, welche beispielsweise Bestandteil der Fahrzeugkarosserie oder mit der dieser verbunden sind. So kann beispielsweise bei der DE 10 2005 021 725 A1 als Fußgängerschutz der vordere Stoßfängerquerträger mittels einer Verlagerungseinrichtung in Fahrzeuglängsrichtung zurückverlagert werden.

Darüber hinaus ist es auch bekannt, zur Reduzierung der Unfallfolgen ein Fahrerassistenzsystem zu aktivieren, beispielsweise selbsttätig einen Bremsvorgang einzuleiten, sobald ein bevorstehender Unfall detektiert worden ist.

Sofern das Fahrzeug mit einem aktiven Lenksystem ausgestattet ist, welches fahrerunabhängig die Erzeugung eines Überlagerungslenkwinkels ermöglicht, der dem vom Fahrer vorgegebenen Lenkwinkel überlagerbar ist, kann durch die Ansteuerung des aktiven Lenksystems ebenfalls eine Reduzierung der Unfallfolgen angestrebt werden. Derartige aktive Lenksysteme stehen aber auf Grund ihres komplexen Aufbaus nur in wenigen Fahrzeugen zur Verfügung.

In der gattungsbildenden WO 2004/065195 A1 wird ein Lenksystem in einem Fahrzeug beschrieben, bei dem in einer mit dem Lenkrad gekoppelte Lenkwelle ein Kupplungselement integriert ist, das zwischen einer die Lenkbewegung übertragenden Schließposition und einer entkoppelten Öffnungsposition verstellbar ist. Im Normalzustand ist das Kupplungselement zur Realisierung einer Steer-by-Wire Lenkeinrichtung geöffnet, wobei die auf das Lenkrad aufgebrachte Lenkbewegung sensiert und ein auf das Lenkgestänge wirkender Stellmotor zur Erzeugung der gewünschten Lenkbewegung angesteuert wird. Bei Störfällen schließt das Kupplungselement, so dass ein mechanischer Durchgriff zwischen Lenkrad und Lenkgestänge gegeben ist und in konventioneller Weise die Räder durch eine Lenkbewegung des Fahrers gelenkt werden können.

Vergleichbare Lenksysteme sind auch aus der US.6,580,989 B1 und der DE 100 42 308 A1 bekannt. Auch diese Druckschriften beschreiben Lenksysteme mit einem einstellbaren Kupplungselement in der Lenkwelle, welches im Normalfall geöffnet ist, um einen Steer-by-Wire-Betrieb zu realisieren, und in Störfällen geschlossen wird.

### Offenbarung der Erfindung

Der Erfindung liegt die Aufgabe zu Grunde, mit einfachen konstruktiven Maßnahmen die Unfallfolgen durch einen selbsttätig durchzuführenden Lenkeingriff zu vermindern.

Diese Aufgabe wird erfindungsgemäß mit den Merkmalen des Anspruches 1 gelöst. Die Unteransprüche geben zweckmäßige Weiterbildungen an.

Das Lenksystem umfasst in an sich bekannter, konventioneller Weise eine üblicherweise als Lenkrad ausgeführte Lenkhandhabe, über die der Fahrer einen gewünschten Lenkwinkel über eine Lenkwelle, ein Lenkgetriebe und eine Zahnstange auf die lenkbaren Räder des Fahrzeugs überträgt. Des Weiteren ist zur Erzeugung eines unterstützenden Antriebsmoments eine Servoeinheit vorgesehen, die üblicherweise über das Lenkgetriebe angekoppelt ist, welches sich im Übergang zwischen der Lenkwelle und der Lenkzahnstange befindet.

Im Übertragungsweg zwischen Lenkrad und Angriffspunkt der Servoeinheit ist im Lenksystem ein Kupplungselement angeordnet, das zwischen einer Schließstellung und einer entkoppelten Öffnungsstellung zu verstellen ist. In der Schließstellung ist ein durchgehender kinematischer Übertragungsweg zwischen Lenkhandhabe und den lenkbaren Rädern gegeben, so dass Lenkbewegungen, welche vom Fahrer erzeugt werden, in konventioneller Weise übertragen werden. In der entkoppelten Öffnungsstellung des Kupplungselementes ist dagegen der kinematische Übertragungsweg unterbrochen, und zwar in einem Bereich zwischen Lenkhandhabe und dem Angriffspunkt der Servoeinheit, wohingegen der weitere Übertragungsweg zwischen Servoeinheit und den lenkbaren Rädern nach wie vor geschlossen ist. Dies eröffnet die Möglichkeit, in bestimmten Situationen, insbesondere in Gefahrensituationen, das Kupplungselement zu öffnen und anschließend die Servoeinheit zu betätigen, um eine Lenkbewegung zu erzeugen, die sich aber auf Grund des geöffneten Kupplungselementes nicht bis zur Lenkhandhabe fortsetzt. Auf diese Weise wird verhindert, dass selbsttätig durchgeführte Lenkeingriffe über eine Betätigung der Servoeinheit zu einer plötzlichen Drehbewegung des Lenkrads führen, was potenziell eine Verletzungsgefahr für den Fahrer birgt.

Das über die Servoeinheit erzeugte Unterstützungsmoment wird bei geöffneter Kupplung in eine Lenkbewegung der lenkbaren Räder des Fahrzeugs übertragen. Da insbesondere im Falle eines unmittelbar bevorstehenden Unfalls zur Reduzierung der Unfallschwere eine schnelle Fahrzeugreaktion erforderlich ist, kann über die Servoeinheit ohne Gefahr für den Fahrer ein hohes Moment erzeugt werden, um eine rasche Lenkbewegung durchzuführen.

Das Lenksystem ist insbesondere als passives Lenksystem ohne die Möglichkeit der Generierung eines Überlagerungslenkwinkels ausgeführt. Gleichwohl ist es aber möglich, auch aktive Lenksysteme, die ein Überlagerungslenkgetriebe zur Erzeugung eines fahrerunabhängigen Überlagerungslenkwinkels aufweisen, mit einem in der erfindungsgemäßen Weise ausgeführten Kupplungselement zwischen Lenkhandhabe und Angriffspunkt der Servoeinheit zu versehen.

Das Kupplungselement ist insbesondere als elektromechanische Kupplung ausgeführt, die über elektrische Stellsignale zwischen der Schließstellung und der entkoppelten Öffnungsstellung zu verstellen ist. Aus Sicherheitsgründen ist es zweckmäßig, dass sich das Kupplungselement im unbestromten Zustand in geschlossener Stellung befindet, in der ein durchgehender kinematischer Übertragungsweg gegeben ist.

Das Kupplungselement befindet sich zwischen der Lenkhandhabe und dem Angriffspunkt der Servoeinheit. In Betracht kommt beispielsweise eine Zweiteilung der Lenkwelle, wobei die beiden Lenkwellenteile über das Kupplungselement miteinander verbunden sind. Möglich ist aber auch eine Anordnung des Kupplungselements im Bereich eines stirnseitigen Endes der Lenkwelle, insbesondere im Übergangsbereich zwischen Lenkwelle und Lenkgetriebe.

Bei der Servoeinheit handelt es sich um einen elektrischen Servomotor.

Bei dem Verfahren zum Betrieb des erfindungsgemäßen Lenksystems wird im Falle eines bevorstehenden Unfalls das Kupplungselement in die entkoppelte Öffnungsstellung versetzt, wobei die Unfallsituation vorzugsweise über eine Umweltsensorik, die im Fahrzeug verbaut ist, detektiert wird. Grundsätzlich möglich ist aber auch die Übermittlung der Information eines bevorstehenden Unfalls bzw. einer Gefahrensituation von außen in das Fahrzeug, beispielsweise über eine Fahrzeug-zu-Fahrzeug-Kommunikationseinrichtung.

Es kann zweckmäßig sein, das Öffnen des Kupplungselements an zusätzliche Bedingungen zu knüpfen, beispielsweise dergestalt, dass das Kupplungselement nur dann in die Öffnungsstellung versetzt wird, wenn mindestens eine Fahrzeugzustandsgröße in einem definierten Wertebereich liegt. Auf diese Weise soll sichergestellt werden, dass mit dem Unterbrechen der Lenkverbindung keine zusätzlichen Gefahren verbunden sind. Als Fahrzeugzustandsgröße, die betrachtet wird, kommt insbesondere die Fahrzeuggeschwindigkeit in Betracht, wobei das Kupplungselement nur geöffnet wird, falls die Fahrzeuggeschwindigkeit einen Schwellenwert unterschreitet, beispielsweise 15 km/h.

Nach dem Öffnen des Kupplungselementes wird die Servoeinheit betätigt, um einen Radlenkwinkel zu erzeugen, so dass das Fahrzeug selbsttätig in eine bestimmte Richtung gelenkt wird, wodurch die Schwere der Unfallfolgen vermindert werden soll. Auf Grund des geöffneten Kupplungselementes pflanzt sich die Erzeugung des Radlenkwinkels nicht bis zum Lenkrad fort. Die Größe und die Richtung des zu erzeugenden Radlenkwinkels sowie sonstige, den Lenkvorgang kennzeichnenden Kenngrößen wie Anfangs- und Endzeitpunkt der Radlenkwinkeländerung bzw. die Radlenkwinkeländerungsgeschwindigkeit werden in Abhängigkeit von der aktuellen Fahrzeug- sowie Umfeldsituation festgelegt. Üblicherweise wird über den Eingriff über die Servoeinheit versucht, zur Unfallfolgenminderung das Fahrzeug durch den gewünschten Radlenkwinkeleinschlag vom Unfallgegner fortzubewegen.

Es kann zweckmäßig sein, zusätzlich zu dem selbsttätigen, über die Ansteuerung der Servoeinheit durchzuführenden Lenkvorgang eine weitere Stelleinrichtung im Fahrzeug selbsttätig zu betätigen, beispielsweise eine Bremseinrichtung. Der Lenkvorgang und ggf. auch die Ansteuerung der weiteren Stelleinrichtung kann über ein Fahrerassistenzsystem erfolgen, beispielsweise ein elektronisches Stabilitätsprogramm (ESP).

Die Stellsignale zur Beaufschlagung des Kupplungselementes sowie des Servomotors werden in einem Regel- bzw. Steuergerät erzeugt, bei dem es sich beispielsweise um das ESP-Steuergerät handeln kann. Das Steuergerät kommuniziert mit der Umfeldsensorik oder eine sonstigen Sensoreinrichtung, welche im Fahrzeug verbaut ist, bzw. mit einem Steuergerät, welches der Umfeldsensorik bzw. der weiteren Sensoreinrichtung zugeordnet ist. Es können beispielsweise auch Airbagsignale zur Detektierung der Unfallsituation herangezogen werden.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung eines Lenksystems, das zur Lenkkraftunterstützung mit einem elektrischen Servomotor ausgestattet ist, wobei in die Lenkwelle ein elektromechanisches Kupplungselement integriert ist,
- Fig. 2: ein Ablaufdiagramm mit Verfahrensschritten zur Durchführung des Verfahrens zum Betrieb des Lenksystems nach Fig. 1.

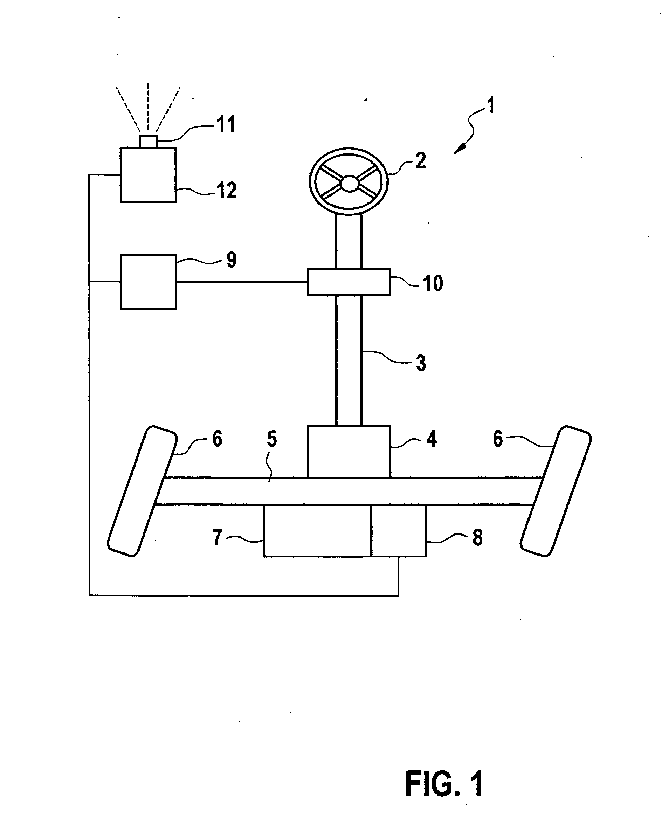

Das in Fig. 1 dargestellte Lenksystem 1 ist in einem Kraftfahrzeug eingebaut und umfasst als Lenkhandhabe ein Lenkrad 2, eine Lenksäule bzw. -welle 3, ein Lenkgetriebe 4 und eine Lenkzahnstange 5. Das Lenkrad 2 ist mit der Lenkwelle 3 verbunden, über das Lenkrad 2 gibt der Fahrer einen gewünschten Lenkwinkel vor. Der Lenkwinkel wird über die Lenkwelle 3 auf das Lenkgetriebe 4 übertragen, das mit der Lenkzahnstange 5 kinematisch verbunden ist, welche die lenkbaren Räder 6 mit einem Radlenkwinkel beaufschlagen. Zur Lenkkraftunterstützung ist ein elektrischer Servomotor 7 als Servoeinheit vorgesehen, der von Stellsignalen eines Regel- bzw. Steuergerätes 8 eingestellt wird, wobei das Regel- bzw. Steuergerät 8 beispielsweise das Steuergerät eines elektronischen Stabilitätsprogramms (ESP) ist.

In die Lenkwelle 3 ist ein elektromechanisches Kupplungselement 10 integriert, das von Stellsignalen eines Regel- bzw. Steuergerätes 9 zwischen einer entkoppelten Öffnungsstellung und einer eine Lenkbewegung übertragenden Schließstellung zu verstellen ist. Bei dem Regel- bzw. Steuergerät 9, das dem Kupplungselement 10 zugeordnet ist, kann es sich beispielsweise ebenfalls um das ESP-Steuergerät handeln. Das elektromechanische Kupplungselement 10 ist stromlos geschlossen, so dass im unbestromten Zustand des Kupplungselementes die beiden Lenkwellenteile, zwischen denen das Kupplungselement angeordnet ist, kinematisch miteinander verbunden sind und die von Fahrer vorgegebene Lenkbewegung unmittelbar und direkt zwischen den Lenkwellenteilen übertragen wird.

In der Öffnungsstellung des Kupplungselementes 10 sind dagegen die beiden Lenkwellenabschnitte voneinander entkoppelt, so dass einerseits eine Lenkbewegung, die vom Fahrer über das Lenkrad 2 vorgegeben wird, nicht auf die lenkbaren Räder 6 übertragen wird und andererseits Bewegungen, die im Lenkstrang unterhalb des Kupplungselementes stattfinden, sich nicht auf das Lenkrad 2 fortpflanzen können.

Das Lenksystem 1 bzw. die Regel- bzw. Steuergeräte 8 und 9, die Bestandteil des Lenksystems sind, kommunizieren mit einer Umfeldsensorik 11 und einem der Umfeldsensorik zugeordneten Regel- bzw. Steuergerät 12. Die Umfeldsensorik 11 einschließlich des zugeordneten Regel- bzw. Steuergerätes ist im Fahrzeug verbaut und umfasst beispielsweise ein Long-Range-Radar zum Erkennen des vor dem Fahrzeug liegenden bzw. sich abspielenden Verkehrsgeschehens. In Abhängigkeit von den Informationen, die über die Umfeldsensorik 11 und das zugeordnete Regel- bzw. Steuergerät 11 geliefert werden, kann das Kupplungselement in der Lenkwelle 3 in Öffnungsstellung versetzt werden. Dies erfolgt insbesondere im Falle eines unmittelbar bevorstehenden Unfalls, um über eine Betätigung des elektrischen Servomotors 7 unabhängig von der Fahrerbetätigung einen Radlenkwinkel zu erzeugen und dadurch das Fahrzeug in eine bestimmte Richtung zu lenken mit dem Ziel, die Unfallfolgen zu vermindern. Auf Grund des geöffneten Kupplungselementes 10 in der Lenkwelle 3 kann sich die Lenkbewegung, welche durch die Betätigung des elektrischen Servomotors 7 erzeugt wird, nicht bis zum Lenkrad 2 fortpflanzen, wodurch die Unfallgefahr durch eine plötzliche, nicht vom Fahrer hervorgerufene Bewegung des Lenkrads ausgeschlossen ist.

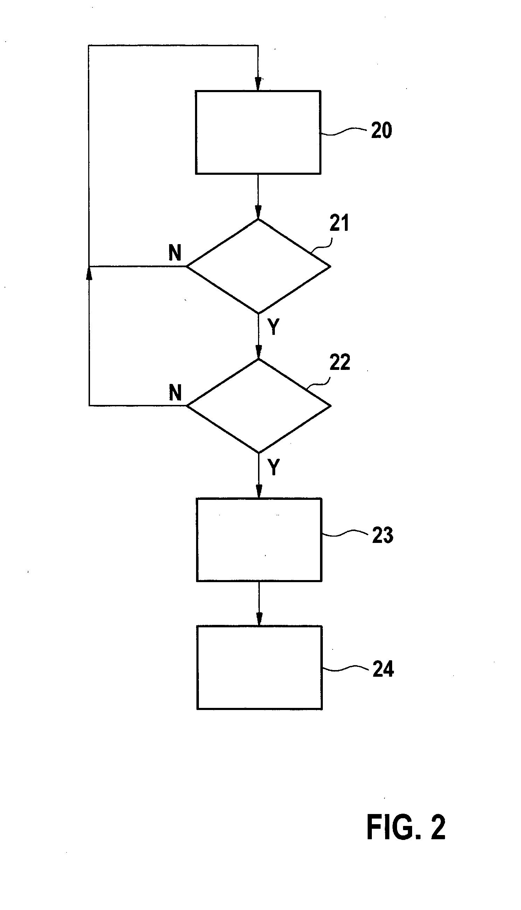

In Fig. 2 ist ein Ablaufschema zur Durchführung des Verfahrens zum Betrieb des Lenksystems im Falle eines bevorstehenden Unfalls dargestellt. Zunächst werden in einem ersten Verfahrensschritt 20 Informationen aus der Umfeldsensorik im Fahrzeug gesammelt und ausgewertet. Im folgenden Verfahrensschritt 21 wird überprüft, ob die Informationen aus der Umfeldsensorik auf einen unmittelbar bevorstehenden Unfall schließen lassen. Dies erfolgt beispielsweise über eine Abfrage, ob der Abstand zu einem vorausbefindlichen Fahrzeug oder einem sonstigen Gegenstand einen Schwellenwert, der insbesondere von weiteren Größen wie beispielsweise der Fahrzeuggeschwindigkeit abhängt, unterschreitet. Ergibt die Abfrage im Verfahrensschritt 21, dass ein Unfall nicht unmittelbar bevorsteht, wird der nein-Verzweigung ("N") folgend wieder zum Beginn des Verfahrens nach Verfahrensschritt 20 zurückgekehrt. Ergibt dagegen die Abfrage, dass ein Unfall unmittelbar bevorsteht, wird der ja-Verzweigung ("Y") folgend zum nächsten Verfahrensschritt 22 fortgefahren.

Im Verfahrensschritt 22 erfolgt eine weitere Überprüfung dahingehend, ob eine weitere Kenngröße innerhalb eines definierten Wertebereichs liegt, beispielsweise die Fahrzeuggeschwindigkeit einen Schwellenwert wie beispielsweise 15 km/h unterschreitet. Die Abfrage im Verfahrensschritt 22 dient als Sicherheitsabfrage, um sicherzustellen, dass der gravierende Eingriff, der mit dem Öffnen des Kupplungselementes verbunden ist, nur durchgeführt wird, wenn hiermit keine zusätzliche, nennenswerte Gefährdung verbunden ist.

Sofern die Sicherheitsabfrage im Verfahrensschritt 22 negativ verläuft, also die überprüfte Zustands- bzw. Kenngröße nicht innerhalb des geforderten Wertebereichs liegt, wird der nein-Verzweigung folgend wieder zum Beginn des Verfahrens zurückgekehrt. Anderenfalls sind alle Bedingungen für das Öffnen des Kupplungselementes erfüllt und es wird zum nächsten Verfahrensschritt 23 fortgefahren, in welchem das Kupplungselement geöffnet wird. Damit ist die kinematische Verbindung zwischen Lenkhandhabe und lenkbaren Rädern des Fahrzeugs unterbrochen.

Im nächsten Verfahrensschritt 24 wird, nachdem das elektromechanische Kupplungselement geöffnet ist, ein selbsttätiger Eingriff über den elektrischen Servomotor im Lenksystem durchgeführt. Über den Servomotor wird ein hohes Moment erzeugt, das in das Lenksystem eingespeist wird, um auf diese Weise einen bestimmten, gewünschten Radlenkwinkel zu erzeugen. Die Richtung und Höhe des gewünschten Radlenkwinkels sowie die Änderungsgeschwindigkeit des Radlenkwinkels sind zusätzlich Kenngrößen, die in Abhängigkeit von der aktuellen Fahrzeug- und Umfeldsituation festgelegt werden.

## Patentansprüche

1. Verfahren zum Betrieb eines Lenksystems in einem Fahrzeug, wobei das Lenksystem (1) ein Lenkrad (2), eine Lenkwelle (3) und eine Servoeinheit (7) zur Erzeugung eines unterstützenden Antriebsmoments aufweist und im Übertragungsweg zwischen Lenkrad (2) und Angriffspunkt der Servoeinheit (7) ein Kupplungselement (10) angeordnet ist, das zwischen einer eine Lenkbewegung übertragenden Schließstellung und einer entkoppelten Öffnungsstellung zu verstellen ist, **dadurch gekennzeichnet, dass** im Falle eines bevorstehenden Unfalls das Kupplungselement (10) in die entkoppelte Öffnungsstellung versetzt wird.

2. Verfahren nach Anspruch 1, **dadurch gekennzeichnet, dass** nach dem Öffnen des Kupplungselements (10) die Servoeinheit zur Erzeugung eines Radlenkwinkels betätigt wird.

3. Verfahren nach Anspruch 1 oder 2, **dadurch gekennzeichnet, dass** das Kupplungselement (10) nur geöffnet wird, falls mindestens eine Fahrzeugzustandsgröße in einem definierten Wertebereich liegt.

4. Verfahren nach Anspruch 3, **dadurch gekennzeichnet, dass** das Kupplungselement (10) nur geöffnet wird, falls die Fahrzeuggeschwindigkeit einen Schwellenwert unterschreitet.

5. Verfahren nach einem der Ansprüche 1 bis 4, **dadurch gekennzeichnet, dass** Sensorsignale einer Umfeldsensorik (11) im Fahrzeug zum Detektieren eines bevorstehenden Unfalls ausgewertet werden.

6. Verfahren nach einem der Ansprüche 1 bis 5, **dadurch gekennzeichnet, dass** nach dem Öffnen des Kupplungselements (10) mindestens eine weitere Stelleinrichtung im Fahrzeug betätigt wird, beispielsweise eine Bremseinrichtung.

7. Regel- bzw. Steuergerät zur Durchführung des Verfahrens nach einem der Ansprüche 1 bis 6.

## Claims

1. Method for operating a steering system in a vehicle, wherein the steering system (1) has a steering wheel (2), a steering shaft (3) and a servo unit (7) for generating an assisting driving torque, and a clutch element (10), which can be adjusted between a closed position which transmits a steering movement and a decoupled open position in the transmission path, is arranged between the steering wheel (2) and the byte point of the servo unit (7), **characterized in that** in the event of an imminent accident the coupling element (10) is moved into the decoupled open position.

2. Method according to Claim 1, **characterized in that** after the opening of the coupling element (10) the servo unit is activated in order to generate a wheel steering angle.

3. Method according to Claim 1 or 2, **characterized in that** the coupling element (10) is opened only if at least one vehicle state variable is in a defined value range.

4. Method according to Claim 3, **characterized in that** the coupling element (10) is opened only if the vehicle speed undershoots a threshold value.

5. Method according to one of Claims 1 to 4, **characterized in that** sensor signals of a surroundings sensor system (11) in the vehicle are evaluated in order to detect an imminent accident.

6. Method according to one of Claims 1 to 5, **characterized in that** after the opening of the coupling element (10) at least one further actuating device in the vehicle is activated, for example a brake device.

7. Closed-loop and/or open-loop control device for carrying out the method according to one of Claims 1 to 6.

## Revendications

1. Procédé de fonctionnement d'un système de direction dans un véhicule, le système de direction (1) comprenant un volant de direction (2), un arbre de direction (3) et une unité d'asservissement (7) pour produire un moment d'entraînement d'assistance et un élément d'accouplement (10) étant disposé dans la voie de transmission entre le volant de direction (2) et le point d'engagement de l'unité d'asservissement (7), lequel élément d'accouplement doit être déplacé entre une position de fermeture transmettant un mouvement de direction et une position d'ouverture désaccouplée, **caractérisé en ce que** l'élément d'accouplement (10) est amené dans la position d'ouverture désaccouplée en cas d'accident imminent .

2. Procédé selon la revendication 1, **caractérisé en ce que** l'unité d'asservissement est actionnée pour produire un angle de braquage de roue après l'ouverture de l'élément d'accouplement (10).

3. Procédé selon la revendication 1 ou 2, **caractérisé en ce que** l'élément d'accouplement (10) n'est ouvert que si au moins une grandeur d'état du véhicule se situe dans une plage de valeurs définie.

4. Procédé selon la revendication 3, **caractérisé en ce que** l'élément d'accouplement (10) n'est ouvert que si la vitesse du véhicule devient inférieure à une valeur seuil.

5. Procédé selon l'une quelconque des revendications 1 à 4, **caractérisé en ce que** des signaux de capteur d'un système de capteurs d'environnement (11) dans le véhicule sont analysés pour détecter un accident imminent.

6. Procédé selon l'une quelconque des revendications 1 à 5, **caractérisé en ce qu'**au moins un dispositif d'actionnement supplémentaire, par exemple un dispositif de freinage, est actionné dans le véhicule après l'ouverture de l'élément d'accouplement (10).

7. Dispositif de régulation ou de commande pour mettre en oeuvre le procédé selon l'une quelconque des revendications 1 à 6.
